# EUROPÄISCHE PATENTSCHRIFT

(11) **EP 0 941 653 B1**
(45) Veröffentlichungstag und Bekanntmachung des Hinweises auf die Patenterteilung: **02.05.2001**
(21) Anmeldenummer: 98118790.9
(22) Anmeldetag: 05.10.1998
(51) Int. Cl.: A01K 1/02

(54) **Teleskopischer Behälter zum Transport von Katzen**
Telescopic transport box for cats
Conteneur télescopique pour le transport de chats

(30) Priorität: 09.03.1998 DE 19810004; 05.06.1998 DE 19825255; 21.09.1998 DE 19843084
(43) Veröffentlichungstag der Anmeldung: 15.09.1999
(73) Patentinhaber: Müller, Hans-Joachim, 53547 Breitscheid (DE)
(72) Erfinder: Müller, Hans-Joachim, 53547 Breitscheid (DE)

(56) Entgegenhaltungen:
- DE-A- 3 439 279
- US-A- 4 140 080
- US-A- 5 671 697

## Beschreibung

Die Erfindung bezieht sich auf ein Katzenhaus, welches zum Transport von Katzen sowohl zum Tierarzt, aber auch für Transporte über größere Zeiträume geeignet ist.

Normalerweise findet der Transport in kleinen, bisher bekannten Katzenhäusern statt, welche für den Gang zum Tierarzt beispielsweise durchaus ausreichend sind.

Gegenstand der vorliegenden Erfindung ist ein teleskopisches Katzentransportgehäuse, welches über den normalen Transport der Katze zum Tierarzt hinaus die Möglichkeit bietet, das Tier über größere Zeiträume zu transportieren, ohne daß die Katze das Transportgehäuse für die üblichen Bedürfnisse wie Kot ablegen und Urinieren verlassen müßte.

Dazu war es erforderlich ein Katzentransportgehäuse zu entwickeln, welches normal verwendbar ist, also in der bisher gewohnten Größe, gleichzeitig aber vergrößerbar ist, damit der Rauminhalt gleichzeitig als Ruheraum dient und des weiteren die Katzenstreuschale aufnehmen kann.

Ein Tiertransportbehälter mit Vergrößerungsmöglichkeit ist bekannt von der Druckschrift US-A-5671697.

Gegenstand der Erfindung ist eine verbesserte Vergrößerungsmöglichkeit für ein Transportgehäuse.

Diese Anforderung wurde erfindungsgemäß durch die Merkmale des kennzeichnenden Teiles der Ansprüche 1 und 2 gelöst.

Zwei baugleiche Teile können durch lamellenförmig angeordnete Stäbe mit ihren offenen Enden ineinandergeschoben nach Art eines Teleskops arbeiten und können so stufenlos den Rauminhalt in seiner Längengröße verändern bis hin zu einer Verdoppelung des normalen Raumangebotes.

Wegen der Hygiene ist die Herstellung des teleskopischen Katzentransportgehäuses in Kunststoff geboten wobei zu berücksichtigen ist, die Fertigungskosten so gering wie möglich zu halten.

Erfindungsgemäß wurde diese Anforderung in der Form gelöst, daß beide ineinanderschiebbaren Gehäuseteile exakt baugleich sind. Diese Möglichkeit ergibt sich aus der geraden Anzahl der lamellenförmig angeordneten Stäbe, welche eine halbe Stabbreite aus der Mitte heraus mit den Seitenwänden verbunden sein müssen.

Ferner wurden beide Seitenteile mit je einem senkrechten Schacht versehen, welcher die senkrecht verschiebbare Falltür aufnimmt, welche immer durch ihr Eigengewicht geschlossen bleibt, ohne daß dafür ein gesonderter Mechanismus erforderlich wäre.

So ergibt sich aus der Baugleichheit beider Seiten der Vorteil, daß eine Seite für den Einstieg der Katze in das teleskopische Katzentransportgehäuse vorgesehen ist und die gegenüberliegende Seite für die Entsorgung der verunreinigten Streuschale Verwendung findet. Im folgenden wird die Erfindung anhand von 2 perspektivischen Abbildungen erläutert.

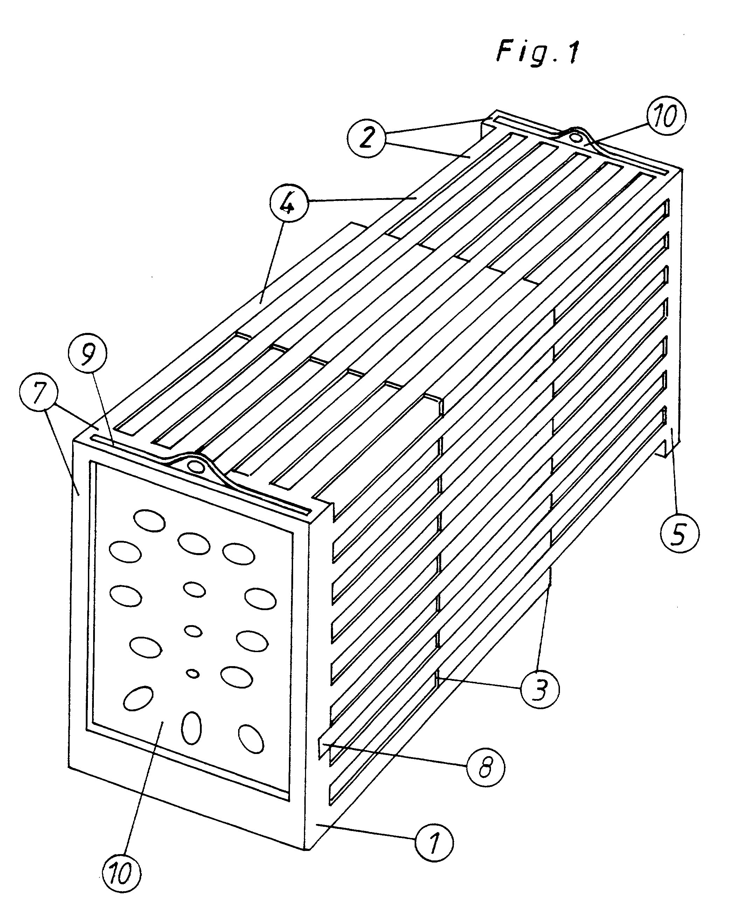

Abbildung 1 zeigt das teleskopische Katzentransportgehäuse mit den dicht aneinandergefügten in Lamellenform angeordneten quadratischen bzw. rechteckigen Stäben (4), welche mit den offenen Enden der Seitenteile (1 + 2) miteinander verbunden sind und durch die Dichte der Anordnung ohne jegliche Führungsschienen in der Längengröße stufenlos veränderbar ineinander verschoben werden können. Von Hand können die beiden Gehäuseteile leicht von Normalgröße bis hin zur Verdoppelung des Rauminhaltes verschoben werden.

Einer möglichen Herstellungsvereinfachung wurde insofern Sorge getragen, daß die Stäbe getrennt von den Seitenwänden gefertigt, nachträglich in dafür vorgesehene Aussparungen (8) der Seitenwände verpresst, arretiert oder verklebt werden können.

Die nachträglich eingesetzten Stäbe bringen das gleiche Resultat wie fest mit den Seitenteilen verschmolzene Stäbe (5) mit dem Unterschied, daß ein größerer Montageaufwand erforderlich wird.

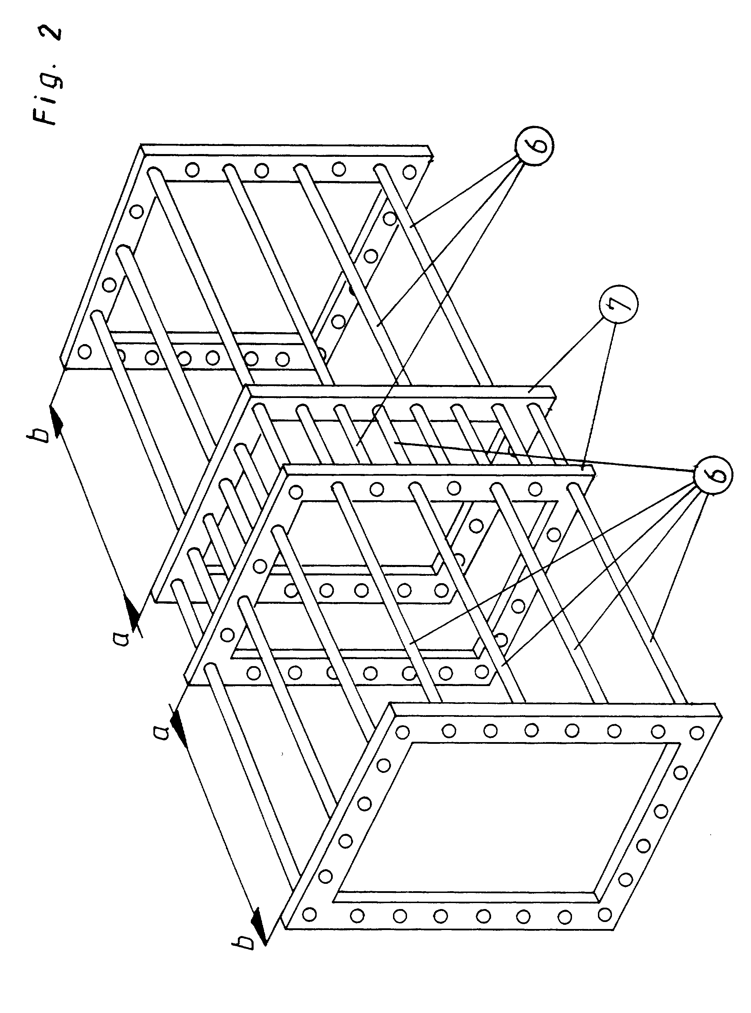

Abbildung 2 zeigt das teleskopische Katzentransportgehäuse in einer Varianten mit Rundrohren bzw. -Stäben (6), wobei die innere Führung, im Gegensatz zu den dicht nebeneinander angeordneten quadratischen oder rechteckigen Stäben, durch zusätzliche Seitenteile (7) gegeben ist.

Im übrigen ist die Funktionsweise die gleiche wie bei den quadratischen oder rechteckigen Stäben.

## Patentansprüche

1. Teleskopisches Katzentransportgehäuse, bestehend aus zwei Gehäuseteilen eines Katzentransportgehäuses (1, 2), die mit ihren offenen Enden (3) ineinandergeschoben werden, dadurch gekennzeichnet, daß die zwei Gehäuseteile baugleich sind und durch gehäusebildende, lamellenartig eng aneinandergefügte quadratische oder rechteckige Stäbe (4) in ihrer Länge teleskopartig ineinander verschiebbar und so in ihrer Längengröße stufenlos veränderbar (a-b) und bis zu 100 % vergrößerbar sind.

2. Teleskopisches Katzentransportgehäuse, bestehend aus zwei Gehäuseteilen eines Katzentransportgehäuses (1, 2), die mit ihren offenen Enden (3) ineinandergeschoben werden, dadurch gekennzeichnet, daß die zwei Gehäuseteile baugleich sind und durch gehäusebildende Rundstäbe oder -Rohre (6), welche ihre Führung durch innere Seitenwände (7) erhalten, in ihrer Länge teleskopartig ineinander verschiebbar und so in ihrer Längengröße stufenlos veränderbar (a-b) und bis zu 100 % vergrößerbar sind.

3. Teleskopisches Katzentransportgehäuse nach Anspruch 1, dadurch gekennzeichnet, daß die lamellenartig angeordneten Stäbe mit den Seitenwänden fest verschmolzen sind (5) oder als Einzelstäbe in dafür vorgesehene Aussparungen (8) eingesetzt, arretiert, gepreßt oder verklebt werden.

4. Teleskopisches Katzentransportgehäuse nach einem der vorhergehenden Ansprüche, dadurch gekennzeichnet, daß die baugleichen Seitenteile mit einem senkrecht verlaufenden Schacht (9) versehen sind, worin eine sich senkrecht zu betätigende Falltüre (10) befindet, welche durch ihr Eigengewicht stets automatisch verschlossen bleibt.

## Claims

1. Telescopic transport box for cats, consisting of two housing parts for a transport box for cats (1,2) that, with their open ends (3), are pushed inside each other, characterised in that the two housing parts are constructed in the same way and can be moved inside each other telescopically along their length by means of slat like square or oblong bars (4) that fit closely together and which form the box. Thus the length is infinitely variable (a-b) and can be enlarged by up to 100%.

2. Telescopic transport box for cats, consisting of two housing parts for a transport box for cats (1,2) that, with their open ends (3), are pushed inside each other, characterised in that the two housing parts are constructed in the same way and can be moved inside each other telescopically along their length by means of round bars or pipes (6) which are guided by the inner side walls (7). Thus the length is infinitely variable (a-b) and can be enlarged by up to 100%.

3. Telescopic transport box for cats as in claim 1, characterised in that the bars arranged as slats are firmly fused to the side walls (5) or inserted in, clamped, moulded or glued as individual bars to the recesses provided for them.

4. Telescopic transport box for cats as in the previous claim characterised in that the similarly constructed side parts are fitted with a vertically running shaft (9), in which there is a trap door (10) that is operated vertically and which automatically always remains closed because of its own weight.

## Revendications

1. Conteneur télescopique pour le transport de chats, se composant de deux parties (1,2) dont les extrémités sont ouvertes (3) et qui peuvent donc coulisser l'une dans l'autre. Le Conteneur présente les caractéristiques suivantes : les deux parties sont identiques. Les tiges carrées ou rectangulaires assemblées en lamelles (4) et formant la monture du conteneur peuvent coulisser les unes dans les autres dans le sens de la longueur, ce qui permet un réglage continu de la longueur (a-b) et notamment, d'augmenter celle-ci de 100 %.

2. Conteneur télescopique pour le transport de chats, se composant de deux parties (1,2) dont les extrémités sont ouvertes (3) et qui peuvent donc coulisser l'une dans l'autre. Le Conteneur présente les caractéristiques suivantes : les deux parties sont identiques. Les barres rondes ou en forme de tube (6) qui sont introduites par les proies intérieures latérales (7) peuvent coulisser les unes dans les autres dans le sens de la longueur, ce qui permet un réglage continu de la longueur (a-b) et notamment, d'augmenter celle-ci de 100%.

3. Conteneur télescopique pour le transport des chats, selon la demande 1 de brevet. Le conteneur présente les caractéristiques suivantes : les tiges assemblées en lamelles sont soit soudées aux parois latérales (5) ou insérées tige par tige, fixées, pressées ou collées dans les rainures prévues à cet effet (8).

4. Conteneur télescopique pour le transport de chats selon une demande précédente de brevet. Le conteneur présente les caractéristiques suivantes : les parois latérales sont identiques et chacune de ces parois est munie d'une rainure (9) maintenant une porte/ trappe qui s'actionne verticalement (10) et qui grâce à son propre poids reste automatiquement fermée.
